# EUROPEAN PATENT APPLICATION

(11) **EP 4 541 558 A1**
(43) Date of publication of application: **23.04.2025**
(21) Application number: 22940940.4
(22) Date of filing: 05.07.2022
(51) Int. Cl.: B29C 64/129

(54) **3D PRINTING APPARATUS AND METHOD FOR COATING USING RELEASE FILM FLAT PUSHING LIQUID**

(30) Priority: 20.06.2022 CN 202210698273
(71) Applicant: BMF Nano Material Technology Co., Ltd, Shenzhen, Guangdong 518000 (CN)
(72) Inventor: PENG, Chong, Shenzhen, Guangdong 518000 (CN)
(74) Representative: Ipside
(86) International application number: PCT/CN2022/103856
(87) International publication number: WO 2023/245730

(57) **Abstract**

This present disclosure relates to a 3D printing device and method that uses a release film to evenly coat a liquid by pushing. The 3D printing device includes: a liquid tank for containing liquid resin for printing, the liquid tank having a main area and an extended area, with the extended area located on one side of the main area's top; a printing platform for supporting printed samples, extending into the main area of the liquid tank; a release film assembly comprising a release film and a release film driving component, where the release film driving component drives the release film to move, allowing the release film to move between the main area and the extended area. The advantageous effects of the present invention are: 1) eliminating various errors caused by the introduction of fast leveling components such as leveling rollers, improving printing quality; 2) achieving precise layer thickness with a single push of the release film, improving printing efficiency; 3) when installing or removing the printing platform, the release film moves to the extended area of the liquid tank, eliminating the need for disassembly and making the operation more convenient.

## Description

### Technical Field

The present invention relates to the field of photopolymerization 3D printing technology, particularly relating to a 3D printing device and method for coating using a release film to evenly push liquid.

### Background Art

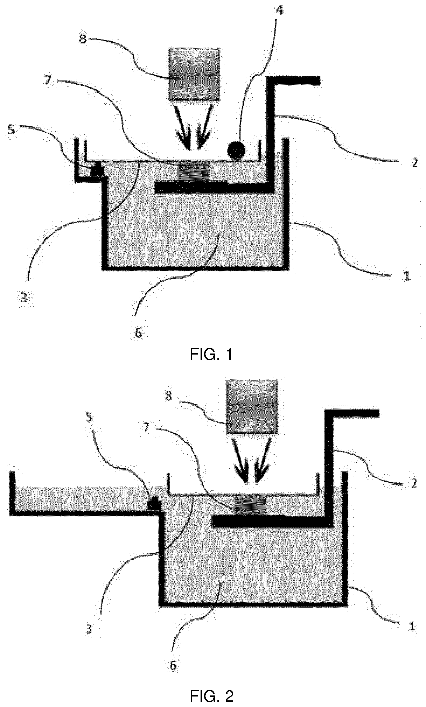

Currently, high-precision stereolithography 3D printing often adopts a configuration where the light source is positioned above and the liquid tank is positioned below. The purpose of this configuration is to use thinner release films or even self-leveling methods to accurately project patterns onto photosensitive resin, thereby achieving higher precision. However, with the increasing demand for printing size and compatibility with liquid resin viscosity, even with the use of release films, a significant amount of time is still required for leveling during the actual printing process in order to achieve the desired layer thickness. Therefore, BMF has developed a new method for rapid leveling using rollers to address the issue of long leveling times and low efficiency during printing. Figure 1 illustrates the current 3D printing structure, where the optical path is positioned above the liquid tank 1, and the release film assembly 3 is fixed to the liquid tank 1. When the printing platform 2 rises, it lifts the liquid resin 6 along with the release film assembly 3, causing it to bulge upward. At this point, the leveling roller assembly 4 on the upper surface of the release film assembly 3 can be moved left and right to eliminate the bulging. This method significantly reduces the leveling waiting time during the printing process. The method also includes a bubble scraper 5, which can slide along the lower surface of the release film assembly 3 to eliminate bubbles and prevent them from affecting print quality. Currently, the following manual operations are required: before each print, the printing platform 2 must be manually installed, followed by the manual installation of the release film assembly 3 and the leveling roller assembly 4. After each print, the leveling roller assembly 4 must be manually removed, followed by the manual removal of the release film assembly 3 and the printing platform 2 in order to obtain the printed sample.

The current method of using a leveling roller has solved the problem of rapid leveling during large-area printing, but it has also introduced some issues: the processing and assembly precision requirements for the leveling roller 4 are extremely high; the motion surface of the leveling roller 4 is difficult to remain parallel to the XY motion plane, which can cause excessive pressure on certain areas of the release film assembly 3 while other areas are not pressed enough; it is difficult to determine the accurate positional relationship between the leveling roller 4 and the release film assembly 3 during use, which can damage the already formed samples when the leveling roller 4 is in operation; when using the roller for leveling, it often needs to roll at a very slow speed multiple times; the leveling roller 4 needs to be removed after each printing is completed.

The current method has the following disadvantages:
1. High difficulty in processing and assembling the leveling roller, affecting printing quality;
2. The motion surface of the leveling roller is difficult to remain parallel to the XY motion plane, affecting printing quality;
3. Difficult to determine the accurate positional relationship between the leveling roller and the release film, affecting printing quality;
4. When using the roller for leveling, it often needs to roll at a very slow speed multiple times, affecting printing efficiency;
5. The leveling roller needs to be removed after each printing, which is cumbersome.

### Summary of the Invention

The technical problem to be solved by the present invention is to provide a 3D printing device and method for coating using a release film to evenly push liquid, in order to overcome the shortcomings of using a leveling roller in the existing technology for large-area printing.

The technical solution adopted to solve the technical problem of the present invention is as follows.

According to one aspect of the invention, a 3D printing device using a release film to evenly push liquid for coating, comprises:
- a liquid tank, which is used to contain liquid resin for printing. The tank has a main area and an extended area, with the extended area located on one side of the top of the main area;
- a printing platform, which is used to support the printed sample, extending into the main area of the liquid tank;
- a release film assembly, which includes a release film and a release film driving component.
The release film driving component is used to drive the release film for translation, allowing the release film to move between the main area and the extended area.

Preferably, the 3D printing device using a release film to evenly push liquid for coating further includes a bubble scraper, which is positioned within the extended area and fixed at the bottom of the extended area of the liquid tank, close to one side of the main area. The top of the bubble scraper aligns with the bottom of the release film.

Preferably, the bubble scraper is mounted at the bottom of the extended area of the liquid tank using a spring and a guiding shaft.

Preferably, the release film assembly of the present invention includes:
- a mounting substrate;
- linear guides, which are fixed on the mounting substrate along the first direction, where the first direction is the direction in which the printing platform moves between the main area and the extended area of the liquid tank;
- a release film support component, which is installed on the linear guide and capable of moving along the first direction driven by the release film driving component. The release film support component has a release film clamping component, and the release film is mounted on the release film clamping component.

Preferably, the release film support component includes:
- a transmission frame, which is connected to the linear guide through sliders;
- release film leveling pillars, being fixed on the transmission frame;
- a leveling frame, which is connected to the release film leveling pillars through release film leveling knobs. The leveling frame is equipped with the release film clamping component.

Preferably, the release film driving component includes:
- a stepper motor, which is fixed at the bottom of the mounting substrate;
- a timing belt, which is connected to the stepper motor and the transmission frame to drive the transmission frame.

Preferably, the mounting substrate is equipped with limitation blocks, which are positioned at the four corners of the mounting substrate to prevent excessive movement of the transmission frame.

Preferably, the mounting substrate is also equipped with position sensors. The sensors are installed on one side edge of the mounting substrate to detect the position of the transmission frame, limiting the lateral movement of the release film clamping component.

According to another aspect of the present invention, a method for 3D printing using a release film to evenly push liquid for coating, using the aforementioned 3D printing device, comprises the following steps:
S1: move the release film to the extended area and place the printing platform into the main area of the liquid tank;
S2: control the printing platform to rise to the printing starting position, ensuring a layer thickness distance between the printing platform and the lower surface of the release film.
S3: control the release film to move to the main area;
S4: focus the pattern on the release film using a UV lens and perform exposure curing to obtain a cured pattern;
S5: control the printing platform to descend, separating the cured printed sample from the release film;
S6: control the release film to move laterally to the extended area of the liquid tank;
S7: repeat steps S2 to S6 until the sample printing is completed;
S8: control the release film to move laterally to the extended area of the liquid tank and remove the printing platform with the printed sample.

Preferably, the present invention provides a method for 3D printing using a release film to evenly spread liquid coating. In this method, a bubble scraper is fixed at the bottom of the extended area of the liquid tank, allowing the bubble scraper in step S6 to remove bubbles from the bottom of the release film.

The advantageous effects of the present invention are as follows:
1. Eliminating various errors caused by the introduction of fast leveling components such as leveling rollers, thereby improving printing quality;
2. Achieving precise layer thickness with a single release film leveling, thereby improving printing efficiency;
3. When installing or removing the printing platform, the release film can be moved to the extended area of the liquid tank without the need for disassembly, making the operation more convenient.

### Brief Description of the Drawings

The technical solutions of the present invention are further described below in connection with the accompanying drawings and embodiments.
Figure 1 is a schematic diagram illustrating the principle of traditional roller leveling 3D printing.
Figure 2 is a schematic diagram illustrating the structure of the 3D printing device using release film for liquid coating according to an embodiment of the present disclosure.
Figure 3 is a schematic diagram illustrating the operational steps of the 3D printing device using release film for liquid coating according to an embodiment of the present disclosure.
Figure 4 is a three-dimensional view illustrating the overall structure of the 3D printing device using release film for liquid coating according to an embodiment of the present disclosure.
Figure 5 is a side view illustrating the overall structure of the 3D printing device using release film for liquid coating according to an embodiment of the present disclosure.
Figure 6 is a schematic diagram illustrating the overall structure of the release film assembly according to an embodiment of the present disclosure.
Figure 7 is a schematic diagram illustrating the structure of the liquid tank component according to an embodiment of the present disclosure.

The reference numerals in the figures are as follows:

### List of reference numerals:

1 - Liquid tank,
2 - Printing platform,
3 - Release film assembly,
4 - Leveling roller,
5 - Bubble scraper,
6 - Liquid resin,
7 - Printed sample,
8 - UV lens,
122 - Slider,
124 - Slider,
101 - Mounting substrate,
102, 103 - Linear guide,
105 - Stepper motor,
107 - Timing belt,
108 - Limitation block,
109 - Transmission frame,
110, 111, 112 - Release film leveling pillars,
113 - Leveling frame,
114 - Position sensor,
120, 121 - Release film leveling knobs,
500 - Release film clamping component,
200 - Liquid tank component,
400 - Bubble scraper component.

### Detailed Description of Embodiments

It should be noted that, unless otherwise specified, the embodiments and features described in this disclosure can be combined with each other without conflict. In the description of this disclosure, it should be understood that terms such as "center," "longitudinal," "lateral," "top," "bottom," "front," "rear," "left," "right," "vertical," "horizontal," "upper," "lower," "inner," "outer," and the like indicating orientation or positional relationships are based on the orientation or positional relationships shown in the drawings for the purpose of facilitating the description and simplifying the description. They do not indicate or imply that the device or element referred to must have a specific orientation, be constructed and operated in a specific orientation, and therefore should not be understood as limiting the scope of the present disclosure. Furthermore, terms such as "first," "second," etc., are used for descriptive purposes and should not be construed as indicating or implying relative importance or implying a specific quantity of the indicated technical features. Thus, features described with "first," "second," etc., can include one or more of those features, either explicitly or implicitly. In the description of the present invention, unless otherwise specified, the term "multiple" means two or more. It should be noted that, unless otherwise explicitly specified and limited, terms such as "installation," "connection," and "attachment" should be broadly interpreted. For example, they can refer to fixed connections, detachable connections, or integral connections. They can involve mechanical connections or electrical connections. They can be directly connected or indirectly connected through intermediate media. They can refer to internal connections between two components. Those skilled in the art can understand the specific meanings of the above terms in the context of the present disclosure. The following is a detailed description of the disclosed technical solution, with reference to the accompanying drawings and embodiments.

### Embodiments

This embodiment provides a 3D printing device that uses a release film to evenly spread liquid for coating, as shown in Figure 2. It includes:
- a liquid tank 1: used to contain liquid resin 6 for printing. The liquid tank 1 has a main area and an extended area, with the extended area located on one side of the top of the main area;
- a printing platform 2: used to support the printed sample 7, extending into the main area of the liquid tank 1;
- a release film assembly 3: comprising a release film and a release film driving component. The release film driving component is used to drive the release film for translation, allowing the release film to move between the main area and the extended area;
- a bubble scraper 4: positioned within the extended area and fixed at the bottom of the extended area of the liquid tank 1, close to one side of the main area. The top of the bubble scraper 5 aligns with the bottom of the release film.

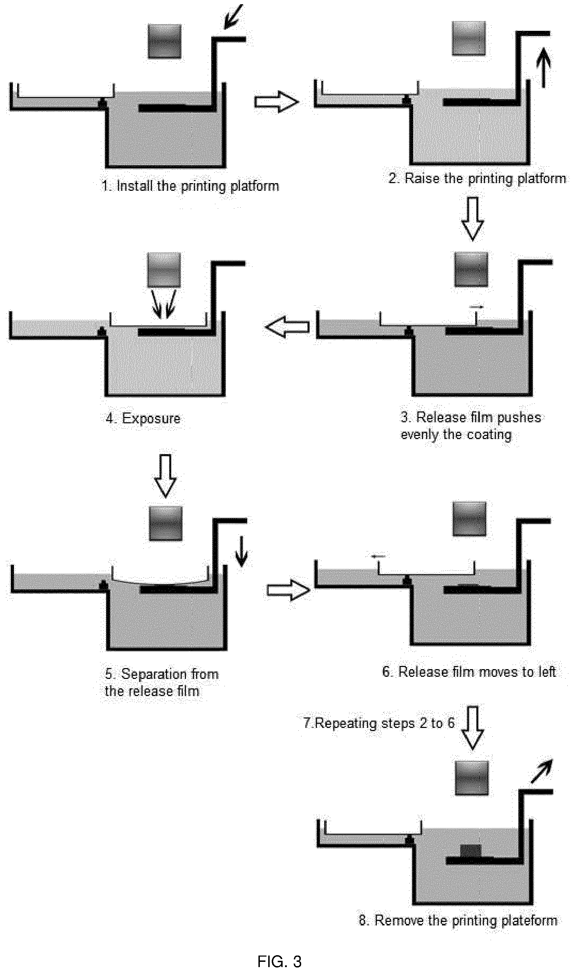

In this embodiment of the 3D printing device, the lifting of the printing platform 2 is driven by a motion axis (not shown in the figure). The lifting of the printing platform 2, the movement of the release film assembly 3, and actions such as UV exposure are controlled by control software installed on an industrial computer. The control software enables the movement of each component to follow the process flowchart shown in Figure 3. Improvements are made to the existing methods (as shown in Figure 1) regarding the liquid tank 1, release film assembly 3, leveling roller 4, bubble scraper 5, and specific printing process. The width of the left side of the liquid tank 1 is increased, adding the capability of lateral movement to the release film assembly 3, eliminating the leveling roller 4, and removing the lateral movement capability of the bubble scraper 5. When leveling is required during printing, the height of the printing platform 2 is controlled to ensure a layer thickness distance between the lower surface of the release film assembly 3 and the surface to be printed. The release film assembly 3 moves from the left side of the printing platform 2 to the right, while the right edge of the release film assembly 3 pushes the liquid resin above the printing platform 2. The pushed liquid surface is then covered by the tensioned release film, ensuring layer thickness accuracy between the lower surface of the release film and the surface to be printed.

This method differs from current methods of self-leveling coating, release film coating, and roller-assisted release film coating. The aforementioned coating methods apply vertical pressure to the liquid to promote leveling, while this method applies tangential thrust parallel to the liquid surface to promote leveling. This approach is more effective in quickly removing excess liquid and forming precise layer thickness beneath the release film. Therefore, the method of using a release film to evenly spread liquid for coating exhibits characteristics of high-quality and fast coating.

The specific motion speed of the release film during the process of using the release film to evenly spread liquid for coating depends on the printing area, layer thickness, and liquid viscosity. A larger printing area, smaller layer thickness, or higher liquid viscosity requires a lower motion speed. The specific motion speed of the release film can be adjusted according to actual conditions for different liquids.

**In** terms of operation, this method ensures that after leveling and focusing the release film, the printing platform 2 can be easily installed or removed by simply moving the release film horizontally to the left end of the liquid tank 1. Additionally, the bubble scraper 5 can have slight vertical movement within a range of 2mm due to the action of springs and guide shafts. When the release film moves laterally, the bubble scraper 5 moves laterally relative to the release film, performing the function of bubble scraping. The bubble scraper 5 can be a unidirectional bubble scraper or a bidirectional bubble scraper. For reference, the unidirectional bubble scraper can be found in patent publication number CN113942224A.

The 3D printing device of this embodiment, as shown in Figure 3, has the printing platform 2 and the release film 3 leveled and focused before printing. The method of use is as follows:
S1. move the release film to the extended area and install the printing platform 2 into the main area of the liquid tank 1;
S2. control the printing platform 2 to rise and reach the printing starting position, ensuring that the printing platform 2 is at a distance of one layer thickness from the lower surface of the release film;
S3. control the release film to move to the main area;
S4. use the UV lens 8 to focus the pattern on the release film and perform exposure curing to obtain a cured pattern (the exposure can be single projection exposure, multi-light machine projection exposure, or XY-axis driven multi-projection exposure);
S5. control the printing platform 2 to descend, separating the cured printed sample 7 from the release film;
S6. control the release film to move horizontally to the extended area of the liquid tank 1;
S7. repeat steps S2 to S6 until the sample printing is completed;
S8. control the release film to move horizontally to the extended area of the liquid tank 1 and remove the printing platform 2 with the printed sample 7.

The bubble scraping function in the above process is implemented when the release film moves horizontally. **In** practical applications, the bubble scraper function can be used or not, depending on the actual situation. It can be installed when needed and removed when not in use.

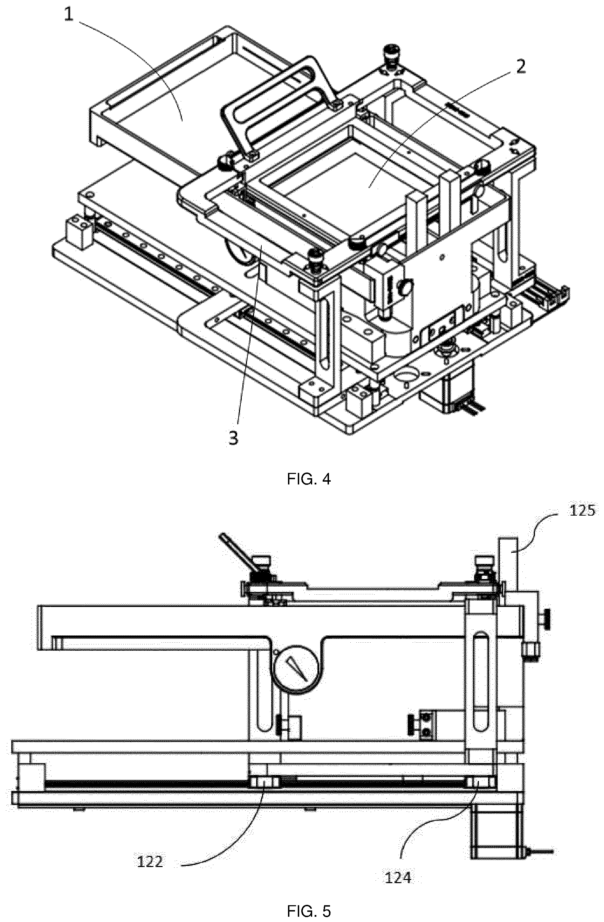

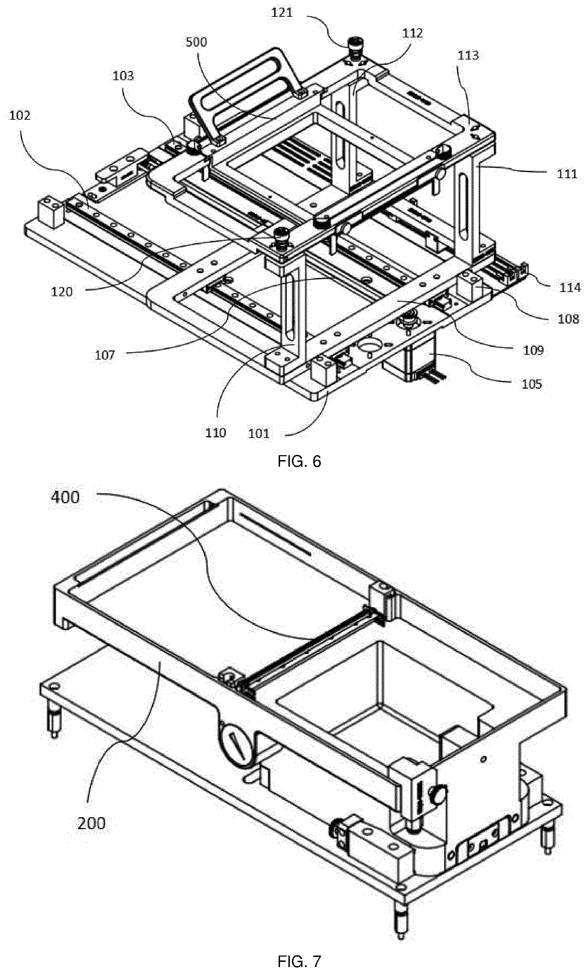

Preferably, as shown in Figures 4, 5, and 7, the liquid tank component 200 of the 3D printing device in this embodiment has a hollow interior for storing liquid resin. As shown in Figure 7, the right side of the liquid tank 1 has a deeper main area, while the left side has a shallower extended area. At the bottom near the edge of the main area, the bubble scraper component 400 is fixed.

Preferably, as shown in Figures 4, 5, and 6, the release film assembly 3 includes:
- a mounting substrate 101;
- linear guides 102 and 103, fixed on the mounting substrate 101 along the first direction (the direction in which the printing platform 2 moves between the main area and the extended area of the liquid tank 1);
- a release film support assembly, mounted on the linear guides 102 and 103 and capable of moving along the first direction driven by the release film driving component. The release film support assembly has a release film clamping component 500, and the release film is mounted on the release film clamping component 500.

Preferably, as shown in Figures 5 and 6, the release film support assembly includes:
- a transmission frame 109, connected to the linear guides 102 and 103 through sliders 124;
- release film leveling pillars 110, 111, and 112, fixed on the transmission frame 109;
- a leveling frame 113, connected to the release film leveling pillars 110, 111, and 112 through release film leveling knobs 120 and 121. The leveling frame 113 is equipped with the release film clamping component 500.

This structure enables the movement of the release film support assembly along the first direction, and the leveling frame 113 can be adjusted for levelness using the release film leveling knobs 120 and 121. Specifically, as shown in Figure 6, the transmission frame 109 and the leveling frame 113 are rectangular, and the release film leveling pillars 110, 111, and 112 are installed at the three corners of the transmission frame 109 and the leveling frame 113. Leveling the leveling frame 113 is equivalent to leveling the release film clamping component 500, which ensures that the release film is parallel to the projection focal plane. The upper ends of the three release film leveling pillars are connected to the leveling frame 113 through tension springs, leveling knobs, and steel balls, ensuring that the leveling frame 113 can be leveled by adjusting the leveling knobs. There are two leveling knobs available.

Preferably, the release film driving component comprises:
- a stepper motor 105, fixed at the bottom of the mounting substrate 101;
- a timing belt 107, connecting the stepper motor 105 and the transmission frame 109, to drive the transmission frame 109. Optionally, the release film driving component can be any linear motion driving component, such as using a stepper motor, linear guide, and timing belt, or a servo motor + linear guide + screw, or any other component capable of linear motion.

Preferably, the mounting substrate 101 is also equipped with limitation blocks 108, which are set at the four corners of the mounting substrate 101 to prevent the movement of the transmission frame 109 from exceeding the operational limits. The mounting substrate 101 is also equipped with a position sensor 114, which is installed on one side edge of the mounting substrate 101 to sense the position of the transmission frame 109, limiting the lateral movement of the release film clamping component 500 by the position sensor 114.

Based on the exemplary embodiments disclosed herein, those skilled in the art can make various changes and modifications without departing from the scope of the present disclosure. The technical scope of the present disclosure is not limited to the content of the specification and must be determined based on the scope of the claims.

## Claims

1. A 3D printing device, using a release film to evenly spread liquid for coating, **characterized by** comprising:
- a liquid tank (1) used to contain liquid resin (6) for printing, the liquid tank (1) has a main area and an extended area, with the extended area located on one side of the top of the main area;
- a printing platform (2) for supporting printed samples (7), extending into the main area of the liquid tank (1);
- a release film assembly (3) comprising a release film and a release film driving component, the release film driving component is used to drive the release film for translation, allowing the release film to move between the main area and the extended area.

2. The 3D printing device according to claim 1, further comprising a bubble scraper (5) positioned within the extended area and fixed at the bottom of the extended area of the liquid tank (1) near one side of the main area, the top of the bubble scraper (5) aligns with the bottom of the release film.

3. The 3D printing device according to claim 2, wherein the bubble scraper (5) is mounted at the bottom of the extended area of the liquid tank (1) using a spring and a guiding shaft.

4. The 3D printing device according to any one of claims 1 to 3, wherein the release film assembly (3) comprises:
- a mounting substrate (101);
- linear guides (102, 103) fixed on the mounting substrate (101) in a first direction, where the first direction represents the direction of movement between the main area and the extended area of the printing platform (2) within the liquid tank (1);
- a release film support assembly mounted on the linear guides (102, 103) and capable of moving in the first direction driven by the release film driving component, the release film support assembly includes a release film clamping component (500), and the release film is mounted on the release film clamping component (500).

5. The 3D printing device according to claim 4, wherein the release film support assembly comprises:
- a transmission frame (109) connected to the linear guides (102, 103) through sliders (124);
- release film leveling pillars (110, 111, 112) fixed on the transmission frame (109);
- a leveling frame (113) connected to the release film leveling pillars (110, 111, 112) through release film leveling knobs (120, 121), the leveling frame (113) is equipped with the release film clamping component (500).

6. The 3D printing device according to claim 5, wherein the release film driving component comprises:
- a stepper motor (105) fixed at the bottom of the mounting substrate (101);
- a timing belt (107) connecting the stepper motor (105) and the transmission frame (109) to drive the transmission frame (109).

7. The 3D printing device according to claim 5, wherein the mounting substrate (101) is further equipped with limitation blocks (108) positioned at the four corners of the mounting substrate (101) to prevent the movement of the transmission frame (109) beyond the operational limits.

8. The 3D printing device according to claim 5, **characterized in that** a position sensor (114) is further provided on the mounting substrate (101), the sensor (114) being mounted on one side edge of the mounting substrate (101) to sense the position of the transmission frame (109), and the lateral movement position of the release film clamping component (500) is restricted by the position sensor (114).

9. A method for 3D printing with coating using a release film to evenly push liquid, **characterized by** using the 3D printing device according to any one of claims 1-8, comprising the following steps:
S1. moving the release film to the extended area and placing the printing platform (2) into the main area of the liquid tank (1);
S2. controlling the printing platform (2) to rise to the printing starting position, ensuring that the printing platform (2) is at a distance of one layer thickness from the lower surface of the release film;
S3. controlling the release film to move to the main area;
S4. focusing the pattern on the release film through the UV lens (8) for exposure and curing to obtain a cured pattern;
S5. controlling the printing platform (2) to descend, separating the cured printed sample (7) from the release film;
S6. controlling the release film to laterally move to the extended area of the liquid tank (1);
S7. repeating steps S2 to S6 until the sample printing is completed;
S8. controlling the release film to laterally move to the extended area of the liquid tank (1) and removing the printing platform (2) with the printed sample (7).

10. The method for 3D printing according to claim 9, **characterized in that** a bubble scraper (400) is fixed at the bottom of the extended area of the liquid tank (1) to remove bubbles from the bottom of the release film in step S6.
